# EUROPÄISCHE PATENTSCHRIFT

(11) **EP 1 661 951 B1**
(45) Veröffentlichungstag und Bekanntmachung des Hinweises auf die Patenterteilung: **27.10.2010**
(21) Anmeldenummer: 04027254.4
(22) Anmeldetag: 17.11.2004
(51) Int. Cl.: C08L 91/06, C10G 73/42, C04B 24/08, C04B 28/14

(54) **Verfahren zur Herstellung eines Montanwachsmodifikats, Montanwachsmodifikat und Verwendung von Montanwachsmodifikat für die Herstellung eines wässrigen Montanwachscompounds**
Process for preparing a montan wax derivative, montan wax derivative and use of montan wax derivative for preparing an aqueous montan wax compound
Procédé de préparation d'un dérivé de cire montan, dérivé de cire montan et utilisation d'un dérivé de cire montan pour la préparation d'une composition aqueux à base de cire montan

(43) Veröffentlichungstag der Anmeldung: 31.05.2006
(73) Patentinhaber: Romonta GmbH, 06317 Amsdorf (DE)
(72) Erfinder: Abraham, Jörg, 06179 Höhnstedt (DE); Edel, Jutta, 06317 Erdeborn (DE); Mieth, Andreas, 06179 Steuden (DE)
(74) Vertreter: Kraft, Werner

(56) Entgegenhaltungen:
- EP-A- 0 669 377
- EP-A- 1 260 331
- US-A- 4 398 953
- DATABASE WPI Section Ch, Week 199249 Derwent Publications Ltd., London, GB; Class A18, AN 1992-404914 XP002316735 & JP 04 304268 A (MITSUBISHI KASEI CORP) 27. Oktober 1992 (1992-10-27)

## Beschreibung

### Stand der Technik

Die Erfindung betrifft ein Verfahren zur Herstellung eines Montanwachsmodifikats, ein insbesondere mit diesem Verfahren herstellbares Montanwachsmodifikat und die Verwendung des Selben zur Gewinnung eines wässrigen Montanwachscompounds mit hydrophobierenden Eigenschaften.
Für Systeme mit hydrophobierender Wirkung wird nach dem Stand der Technik, wie zum Beispiel in der DD 160 516 beschrieben, Montanwachs mit festen Kohlenwasserstoffen in fester, fein verteilter Form eingesetzt.
Weiterhin finden dafür gemäß DD 205 882 Compounds aus Montanwachs und festen Kohlenwasserstoffen in fester, fein verteilter Form oder als Emulsion bzw. Dispersion Verwendung.
In der DD 221 994 ist die Behandlung von zu hydrophobierenden Produkten mit einer Emulsion aus Montanwachs, Emulgator, bestehend aus Ethylenoxidadukten auf der Basis von Alkylphenolen und längerkettigen Fettalkoholen, und Wasser beschrieben.
Weiterhin ist in der DD 284 126 die Hydrophobierung mit Montanwachs und Paraffin erwähnt.
In der EP 0 669 377 wird die Verwendung einer wässrigen Emulsion, bestehend aus paraffinischen Kohlenwasserstoffen, Montanwachs und Polyvinylalkohol unter Einsatz von üblichen Emulgatoren, nämlich nichtionischen Tensiden wie Alkylphenoxypoly(ethylenoxy)ethanolen, Sorbitanfettsäureestern und Polyoxyethylensorbitanfettsäureestern wie auch anionischen Tensiden, beispielsweise verseiften Fettsäuren, und bekannten Stabilisatoren, nämlich Alkalimetall-oder Ammoniumhydroxiden, vorgeschlagen.

In der WO 99/35103 ist eine Montanwachsemulsion mit sulfatischen anionischen Tensiden, zum Beispiel Sulfat oder Sulfonat, sulfonierte Naphthalen- FormaldehydKondensate, als Polymer vorzugsweise Aryl- Sulfonat, Naphthalen- Sulfonat, vorteilhafterweise als Na- Salz, und nichtionogenen Tensiden, zum Beispiel höherer Alkohol, Alkenol, Alkan- oder Alkensäure oder Aryl- Alkohol oder Carbonsäureethoxylate mit mindestens zwei Äquivalenten von Ethylenoxid, ethoxylierte Alkyl-, Alkenyl-, Alkanoyl-, Alkenoyl- Komponenten, alternativ auch polyglycosinierte Alkyl-, Alkenyl-, Alkanoyl-, Alkenoyl- und Aryl- Komponenten, unter Verwendung von Montanwachs und Erdöl- Kohlenwasserstoffen, nämlich Paraffin, dargestellt.
Im US- Paten 4,748,196 wird eine wässrige Emulsion aus einer Wachskomponente, Paraffin, Montanwachs oder Polyolefinwachs, mit Olefin- Maleinsäureanhydrid-Derivaten, Alkalihydroxiden und/oder nichtionogenen Emulgatoren sowie den gängigen Stabilisierungsmitteln Polyvinylalkohol, Polyacrylamid, Methylcellulose, Carboxymethylcellulose oder Hydroxypropylcellulose beschrieben.
Schließlich wird in der WO 02/098816 eine wässrige Emulsion mit Kohlenwasserstoffwachsen, nämlich Paraffin- Wachs, Carnauba- Wachs, Polyethylenwachs, synthetische Wachsester, Säurewachs, maleinsäuremodifizierte Kohlenwasserstoffe und Kombinationen daraus, unter Verwendung von polyolefinischen maleinsäureanhydrid- gepfropften Polymeren und Polyvinylalkohol erwähnt.

Es wäre wünschenswert, ein wässriges Montanwachscompoundsystem, z. B. als Montanwachsdispersion, zur Verfügung zu haben, das sich gegenüber dem bekannten Stand der Technik durch höhere Stabilität, verstärkte hydrophobierende Wirksamkeit bei der Behandlung von unterschiedlichen Stoffsystemen und durch reduzierende Wirkung auf die Entstehung von Schimmelpilzen auszeichnet. Die bestehenden Systeme vermögen dieses nicht oder nur unbefriedigend zu leisten.

### Aufgabenstellung

Daher besteht die erfindungsgemäße Aufgabe in der Entwicklung eines Verfahrens zur Herstellung eines Montanwachsmodifikats und eines mit diesem Verfahren herstellbaren Montanwachsmodifikat sowie in der Verwendung des Selben zur Gewinnung eines wässrigen Montanwachscompounds mit hydrophobierenden Eigenschaften.
Die Lösung der Aufgabenstellung ist in den selbständigen Patentansprüchen angegeben. Die untergeordneten Ansprüche enthalten zweckmäßige Ausgestaltungen.

Die Erfindung wird darin gesehen, dass Montanwachs mit einem Zusatz von Tallharz oder einem Ester auf Tallharzbasis versehen und nachfolgend einer gezielten chemischen Modifizierung unterzogen wird.
Konkret wird vorgeschlagen, Montanwachs zunächst bei 100°C bis 140°C,
vorzugsweise 120°C, aufzuschmelzen und nachfolgend 3 bis 30 Masse- %,
vorzugsweise 15 Masse- %,
Tallharz oder ein Ester auf Tallharzbasis unter Rühren hinzuzufügen.
Tallharz selbst beinhaltet als Hauptkomponenten ein Gemisch aus Abietinsäure, Dehydroabietinsäure, Palustrinsäure, Dihydroabietinsäure, Neoabietinsäure sowie Pimar-und Isopimarsäure. Als Tallharzester wird der Glycerolester hier explizit genannt.
In der sich anschließenden Reaktionsstufe wird eine chemische Strukturänderung des Montanwachsgemisches durch oxidierend wirkende Mineralsäuren bei Anwesenheit von Sauerstoff und unter Rühren bei 110°C bis 150°C, vorzugsweise 140°C, vollzogen.
So werden beispielsweise bei der Verwendung von 0,5 bis 4,0 Masse- %, vorzugsweise 2,0 Masse- %, konzentrierter Schwefelsäure und bei Zufuhr von Sauerstoff durch Lufteinblasung in das Molekülgerüst des vorliegenden Wachs-Harz-Gemischs Sulfonsäuregruppierungen eingefügt und weitere Carboxylgruppen erzeugt.
Diese werden im Anschluss mit 0,7 bis 4,5 Masse- %, vorzugsweise 2,4 Masse- %, Alkalihydroxiden in ihre entsprechenden Salze überführt.
Erfindungsgemäß erhält man ein Stoffsystem in Form eines Montanwachsmodifikats, dessen Struktur über die gewählten Aufwandsmengen und Verfahrensbedingungen beeinflussbar und dessen Eigenschaften damit je nach Bedarf unterschiedlich einstellbar sind.

Vergleichsmessungen mittels FT-IR- Spektroskopie (Fourier Transform Infrared Spectroscopy) von Montanwachs im Ausgangszustand und des erfindungsgemäß hergestellten Montanwachsmodifikats haben deutliche Veränderungen im Wellenzahlenbereich bei ca. 620 cm⁻¹, 1.030 cm⁻¹, 1.110 cm⁻¹, 1.714cm⁻¹ und 1.735 cm⁻¹ gezeigt. Mittels des DSC- Verfahrens (Differential Scanning Calorimetry) aufgenommener Thermogramme war eine deutliche Verschiebung in der Kurvenstruktur sowie eine signifikante Änderung im Peakmaximum und in der normierten Enthalpie nachweisbar.

Weiterhin wird erfindungsgemäß vorgeschlagen, das Montanwachsmodifikat für die Herstellung eines wässrigen Montanwachscompoundsystems, beispielsweise einer Montanwachsdispersion, zu verwenden.
Überraschenderweise hat sich gezeigt, dass ein Montanwachscompoundsystem, enthaltend ein Montanwachsmodifikat nach dem beschriebenen Verfahren an Stelle von Montanwachs, eine höhere Stabilität und ein signifikant erhöhtes Wirkungspotential bei der Hydrophobierung von unterschiedlichen Anwendungsstoffsystemen, zum Beispiel Gips, Karton, Holz und dgl. bzw. Kombinationen daraus, aufweist. Neben der Verwendbarkeit in unterschiedlichen Anwendungsstoffsystemen zeichnet es sich darüber hinaus durch reduzierende Wirkung auf die Entstehung von Schimmelpilzen aus.

### Ausführungsbeispiel

Die Erfindung wird anhand eines Ausführungsbeispiels näher erläutert.

Zur Herstellung des erfindungsgemäßen Montanwachsmodifikats werden folgende Bestandteile verwendet:

| | |
|---|---|
| Montanwachs | 80,6 Masse- %, |
| Glycerol- Tallharzester | 15,0 Masse- %, |
| Schwefelsäure (konz.) | 2,0 Masse- %, |
| Kalilauge (45 %- ig) | 2,4 Masse- %. |

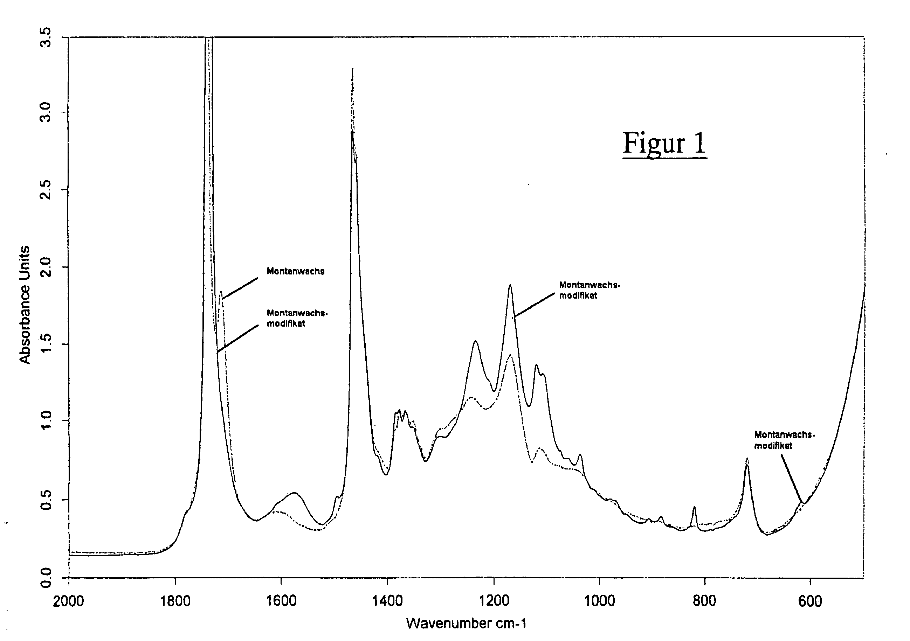

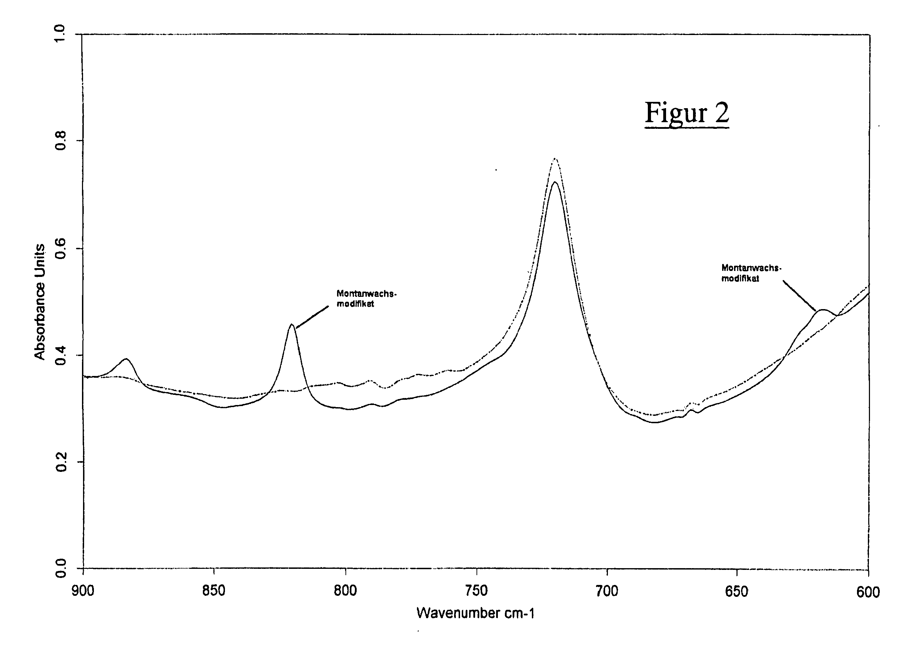

Das Montanwachs wird aufgeschmolzen, und zwar unter Rühren bei ca. 120°C.
Dem flüssigen Montanwachs wird Glycerol- Tallharzester zugesetzt und unter Lufteinblasung bei ca. 140°C wird konzentrierte Schwefelsäure dosiert. Nach der Reaktionszeit von etwa 60 Minuten wird Kalilauge unter Rühren zugegeben. Nachdem die Salzbildung abgeschlossen ist, wird das so hergestellte Montanwachsmodifikat konfektioniert.
Gemäß dem beschriebenen Herstellungsverfahren ist das in Rede stehende Montanwachsmodifikat ein Produkt aus einer gezielten chemischen Reaktion von mit Tallharz oder einem Ester auf Tallharzbasis abgemischtem Montanwachs, wobei unterschiedliche in ihre Salze überführte Säuregruppierungen im Molekülgerüst eingefügt vorliegen.
In den zugehörigen Figuren 1 und 2 ist ein FT- IR- Spektrenvergleich (Fourier Transform Infrared Spectroscopy) von Montanwachs im Ausgangszustand und dem erfindungsgemäßen Modifikat angegeben. Die Veränderungen sind besonders im Wellenzahlenbereich bei ca. 620 cm⁻¹, 1.030 cm⁻¹, 1.110 cm⁻¹, 1.714cm⁻¹ sowie 1.735 cm⁻¹ deutlich erkennbar.

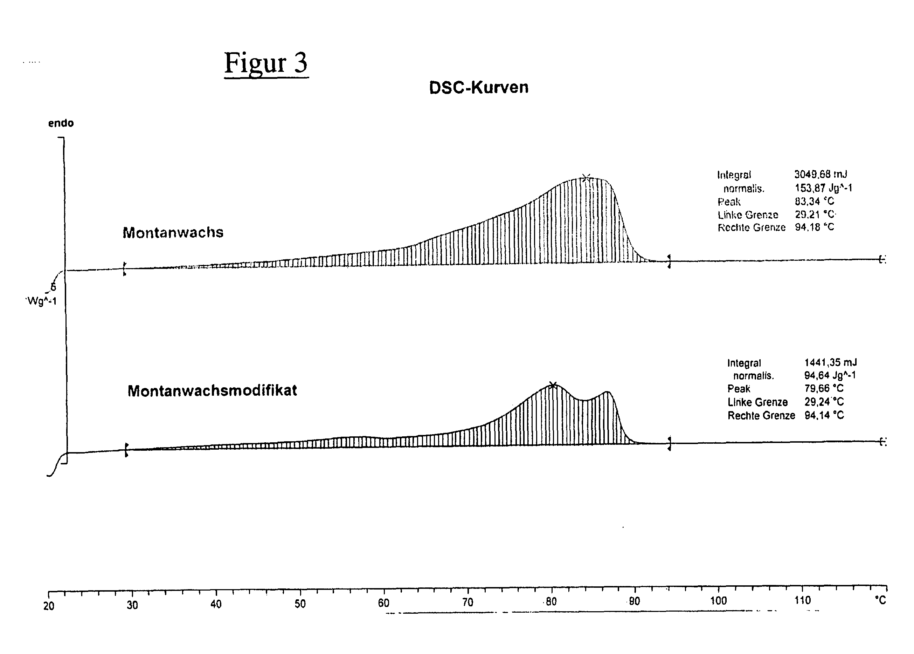

Figur 3 zeigt je eine Messkurve eines nach dem DSC- Verfahren (Differential Scanning Calorimetry) aufgenommenen Thermogramm der Ausgangskomponente im Vergleich zum hergestellten Montanwachsmodifikat. Hier ist eine deutliche Verschiebung in der Kurvenstruktur sowie eine signifikante Änderung im Peakmaximum und in der normierten Enthalpie ersichtlich.

Das erfindungsgemäße Montanwachsmodifikat steht nun als Ausgangskomponente für die Herstellung des wässrigen Montanwachscompounds, beispielsweise in Form einer Montanwachsdispersion, zur Verfügung.
Hierzu werden bekannte Verfahren genutzt. Die Dispergierung erfolgt als ein Compound mit 5 bis 50 Masse- % Montanwachsmodifikat und 95 bis 50 Masse- % paraffinischen Kohlenwasserstoffen unter Verwendung der für herkömmliche nicht modifizierte Montanwachssysteme üblichen Emulgatoren und Stabilisatoren.

Die nachstehende Tabelle dokumentiert die beim Einsatz einer Dispersion mit dem erfindungsgemäßen Montanwachsmodifikat überraschenderweise auftretende Stabilität im Vergleich zu einer Dispersion mit nichtmodifiziertem Montanwachs.

| Tage der Lagerung | Abgetrennte Schicht unter Einsatz von nicht-modifiziertem Montanwachs [mm] | Abgetrennte Schicht unter Einsatz von modifiziertem Montanwachs [mm] |
|---|---|---|
| 5 | 2 | 0 |
| 10 | 4 | 0 |
| 15 | 5 | 1 |
| 20 | 8 | 1 |
| 25 | 11 | 2 |
| 30 | 12 | 2 |
| 35 | 14 | 3 |
| 40 | 17 | 4 |
| 45 | 18 | 4 |
| 50 | 21 | 4 |
| 55 | 22 | 4 |
| 60 | 23 | 5 |
| 65 | 27 | 5 |
| 70 | 28 | 5 |
| 75 | 30 | 6 |
| 80 | 32 | 6 |

Bei der Verwendung des erfindungsgemäßen Montanwachsmodifikats als Wirkkomponente im wässrigen Montanwachscompound (Dispersion) zeigte sich weiterhin überraschenderweise eine signifikante Verbesserung der hydrophobierenden Wirkung auf unterschiedliche Stoffsysteme im Vergleich zu der Wirkung der Dispersion ohne eine Modifizierung des Montanwachses.

Diese Wirkungsunterschiede sind in der nachstehenden Tabelle als Anwendungsbeispiel bei der Hydrophobierung von Gips nach einer zweistündigen Wasserlagerung aufgeführt.

| Konzentration im Gips [Masse- %] (bezogen auf Feststoff der Dispersion) | Wasseraufnahme unter Einsatz von nicht- Einsatz modifiziertem Montanwachs [Masse- %] | Wasseraufnahme unter von modifiziertem Montanwachs [Masse- %] |
|---|---|---|
| 0,6 | 20,5 | 4,6 |
| 0,8 | 10,6 | 2,2 |
| 1,0 | 4,8 | 1,0 |

## Patentansprüche

1. Verfahren zur Herstellung eines Montanwachsmodifkats, **dadurch gekennzeichnet, dass** Montanwachs zunächst bei 100°C bis 140°C aufgeschmolzen wird,
dass nachfolgend 3 bis 30 Masse- % Tallharz oder ein Ester auf Tallharzbasis unter Rühren hinzugefügt werden,
dass nachfolgend unterschiedliche Säuregruppierungen bei Anwesenheit von oxidierend wirkenden Mineralsäuren und unter Lufteinblasung und Rühren bei 110°C bis 150°C in das vorliegende Wachs- Harz- Gemisch eingefügt werden,
und dass diese Säuregruppierungen im Anschluss durch Zusatz von 0,7 bis 4,5 Masse- % Alkalihydroxiden in ihre entsprechenden Salze überführt werden.

2. Verfahren zur Herstellung eines Montanwachsmodifikats nach Anspruch 1, **dadurch gekennzeichnet, dass** das Aufschmelzen des Montanwachses bei 120°C erfolgt, dass 15 Masse- % Tallharz oder Ester auf Tallharzbasis zur Schmelze hinzugefügt werden, dass die Temperatur während des Einfügens der Säuregruppierungen 140°C beträgt und dass schließlich 2,4 Masse- % Alkalihydroxide zugesetzt werden.

3. Verfahren zur Herstellung eines Montanwachsmodifikats nach Anspruch 1, **dadurch gekennzeichnet, dass** Einfügen von Säuregruppierungen in das Molekülgerüst durch Verwendung von 0,5 bis 4,0 Masse- % konzentrierter Schwefelsäure erfolgt.

4. Verfahren zur Herstellung eines Montanwachsmodifikats nach Anspruch 1, **dadurch gekennzeichnet, dass** als Tallharz Glycerolester verwendet wird.

5. Montanwachsmodifikat, **dadurch gekennzeichnet, dass** dieses ein Produkt aus einer gezielten chemischen Reaktion von mit Tallharz oder einem Ester auf Tallharzbasis abgemischtem Montanwachs ist, wobei in ihre Salze überführte Säuregruppierungen im Molekülgerüst eingefügt vorhanden sind.

6. Verwendung von Montanwachsmodifikat nach Anspruch 5 für die Herstellung eines wässrigen Montanwachscompounds mit hydrophobierenden Eigenschaften.

7. Verwendung von Montanwachsmodifikat nach Anspruch 5 für die Herstellung eines wässrigen Montanwachscompoundsystems in Form einer Dispersion, im Wesentlichen bestehend aus 5 bis 50 Masse- % Montanwachsmodifikat, 95 bis 50 Masse- % paraffinischen Kohlenwasserstoffen und bekannten Emulgatoren und Stabilisatoren.

8. Verfahren zur Herstellung eines Montanwachsmodifikats nach Anspruch 3, **dadurch gekennzeichnet, dass** Einfügen von Säuregruppierungen in das Molekülgerüst durch Verwendung von 2,0 Masse- % konzentrierter Schwefelsäure erfolgt.

## Claims

1. The invention relates to a method for the production of a modified montan wax **characterized in that** montan wax is first melted at 100° C to 140° C,
that thereafter 3 to 30 mass percent of tall oil resin or an ester based on tall oil resin are added while stirring,
that thereafter various acid groups are introduced into the wax-resin mixture in the presence of mineral acids with an oxidizing effect while injecting air and stirring at 110°C to 150°C,
and that said acid groups are subsequently converted into their respective salts through addition of 0.7 to 4.5 mass percent of alkali hydroxides.

2. The invention relates to a method for the production of a modified montan wax according to claim 1 **characterized in that** the montan wax is melted at 120°C,
that 15 mass percent of tall oil resin or an ester based on tall oil resin are added to the melt,
that the temperature during the introduction of the acid groups is 140°C and
that finally 2.4 mass percent of alkali hydroxides are added.

3. The invention relates to a method for the production of a modified montan wax according to claim 1 **characterized in that** the introduction of acid groups into the molecular skeleton is carried out using 0.5 to 4.0 mass percent of concentrated sulfuric acid.

4. The invention relates to a method for the production of a modified montan wax according to claim 1 **characterized in that** the tall oil resin used is glycerol ester.

5. The invention relates to a modified montan wax **characterized in that** said modified montan wax is a product obtained by a targeted chemical reaction of montan wax mixed with tall oil resin or an ester based on tall oil resin with acid groups converted into their respective salts existing introduced in the molecular skeleton.

6. The invention consists in the use of a modified montan wax according to claim 5 for the production of an aqueous wax composition with hydrophobic properties.

7. The invention consists in the use of a modified montan wax according to claim 5 for the production of an aqueous montan wax composition system in the form of a dispersion which materially consists of 5 to 50 mass percent of modified montan wax, 95 to 50 mass percent of paraffinic hydrocarbons and known emulsifiers and stabilizers.

8. The invention relates to a method for the production of a modified montan wax according to claim 3 **characterized in that** the introduction of acid groups into the molecular skeleton is carried out using 2.0 mass percent of concentrated sulfuric acid.

## Revendications

1. ° Procédé de préparation d'un dérivé de cire montan **caractérisé par le fait que** la cire montan est d'abord portée à fusion à une température de 100 C° à 140 C°, de sorte qu'ensuite un pourcentage en masse de 3 à 30 % de résine d'huile de pin ou d'un ester sur la base de résine d'huile de pin soit ajouté, en agitant;
de sorte qu'ensuite de différents groupements acides soient insérés en présence des acides minéraux ayant une influence oxydante et par injection d'air comprimé et en agitant à une température de 110 C° à 150 C° dans le mélange présent de cire et de résine;
de sorte que ces groupements acides soient transformés en leurs sels correspondants en ajoutant ensuite un pourcentage en masse de 0,7 à 4,5 % des hydroxydes alcalins.

2. ° Procédé de fabrication d'un dérivé de cire montan conformément à la revendication 1, **caractérisé par le fait que** la cire montan est portée à fusion à une température de 120 °C, de sorte qu'un pourcentage en masse de 15 % de résine d'huile de pin ou d'ester sur la base de résine d'huile de pin soit ajouté à la fusion; de sorte que la température s'élève à 140 °C pendant l'insertion des groupements acides et que ensuite un pourcentage en masse de 2,4 % de hydroxyde alcalin soit ajouté.

3. ° Procédé de fabrication d'un dérivé de cire montan conformément à la revendication 1, **caractérisé par le fait que** l'insertion des groupements acides dans l'édifice moléculaire s'effectue en utilisant un pourcentage en masse de 0,5 à 4,0 % d'acide sulfurique concentré.

4. ° Procédé de fabrication d'un dérivé de cire montan conformément à la revendication 1, **caractérisé par le fait qu'**un ester glycérique est utilisé comme résine d'huile de pin.

5. ° Dérivé de cire montan, **caractérisé par le fait que** c'est un produit résultant d'une réaction chimique ciblée de cire montan mélangée avec de la résine d'huile de pin ou avec un ester sur la base de résine d'huile de pin, et que des groupements acides transférés en ses sels ont été insérés et existent dans l'édifice moléculaire.

6. ° Utilisation de dérivé de cire montan conformément à la revendication 5 pour la fabrication d'une composition aqueuse de cire montan qui possède des propriétés hydrophobes.

7. ° Utilisation de dérivé de cire montan conformément à la revendication 5 pour la fabrication d'un système de composition de cire montan aqueux sous la forme d'une dispersion qui se compose essentiellement d'un pourcentage en masse de 5 à 50 % de dérivé de cire montan, d'un pourcentage en masse de 95 à 50 % de hydrocarbures paraffiniques et des émulsifiants et des stabilisateurs connus.

8. ° Procédé de fabrication d'un dérivé de cire montan conformément à la revendication 3, **caractérisé par le fait que** l'insertion des groupements acides dans l'édifice moléculaire est effectuée par l'utilisation d'un pourcentage en masse de 2,0 % de l'acide sulfurique concentré.
